# EUROPÄISCHE PATENTSCHRIFT

(11) **EP 2 911 795 B1**
(45) Veröffentlichungstag und Bekanntmachung des Hinweises auf die Patenterteilung: **01.02.2017**
(21) Anmeldenummer: 13779864.1
(22) Anmeldetag: 22.10.2013
(51) Int. Cl.: B02C 2/06, B02C 23/04, F16B 1/00, F16B 31/04

(54) **KREISELBRECHER ZUR ZERKLEINERUNG VON BRECHGUT**
GYRATORY CRUSHER FOR COMMINUTING MATERIAL TO BE CRUSHED
CONCASSEUR GIRATOIRE POUR LE CONCASSAGE DE MATÉRIAUX

(30) Priorität: 26.10.2012 DE 102012110267
(43) Veröffentlichungstag der Anmeldung: 02.09.2015
(73) Patentinhaber: ThyssenKrupp Industrial Solutions AG, 45143 Essen (DE)
(72) Erfinder: SUDMANN, David, 48153 Münster (DE); MECKE, Hans-Jürgen, 47259 Duisburg (DE)
(74) Vertreter: ThyssenKrupp Intellectual Property GmbH
(86) Internationale Anmeldenummer: PCT/EP2013/072084
(87) Internationale Veröffentlichungsnummer: WO 2014/064112

(56) Entgegenhaltungen:
- EP-A1- 1 593 863
- WO-A1-2007/087719
- BE-A- 380 542
- GB-A- 159 950
- GB-A- 915 359
- GB-A- 2 467 747
- US-A1- 2002 088 887

## Beschreibung

Die vorliegende Erfindung betrifft einen Kreiselbrecher zur Zerkleinerung von Brechgut mit einem Brechergehäuse, in dem eine einen Brechkegel bildende Brechachse angeordnet ist und der um eine Vertikalachse taumelbeweglich im Brechergehäuse aufgenommen ist, wobei zur Aufnahme der Brechachse eine Traverse vorgesehen ist, die sich diametral über das Brechergehäuse erstreckt und mit ihren Traversenenden mit dem Brechergehäuse verbunden ist.

### STAND DER TECHNIK

Die DE 1 290 034 zeigt einen Kreiselbrecher zur Zerkleinerung von Brechgut mit einem Brechergehäuse, in dem eine Brechachse angeordnet ist und der um eine Vertikalachse taumelbeweglich im Brechergehäuse aufgenommen ist. Das Brechergehäuse weist eine runde, etwa trichterartige Form auf, und auf dem oberen Rand des Brechergehäuses ist eine Traverse angeordnet, in der zur Lagerung der Brechachse eine Abwälzbuchse aufgenommen ist. Auf der unteren Seite ist die Brechachse in einer Exzenterbuchse gelagert, und zur axialen Abstützung der Brechachse in der Vertikalen ist ein unterseitiges Drucklager vorgesehen. Die Traverse ist auf dem oberen Rand des Brechergehäuses verschraubt, und es sind Schraubenbolzen gezeigt, mit denen die Traverse mit dem Brechergehäuse verbunden ist.

Ein Kreiselbrecher und ein Verfahren gemäß dem Oberbegriff des Anspruchs 1 beziehungsweise des Anspruchs 9 ist aus US 2002/088887 A1 bekannt. Im Betrieb eines Kreiselbrechers entstehen sehr hohe, dynamische Prozesskräfte zwischen der Brechachse und dem Brechergehäuse, sodass eine Verbindung der Traverse mit dem Brechergehäuse durch eine einfache Verschraubung mittels Schraubenbolzen nicht ausreicht. Insbesondere dann, wenn sich die Traverse in einer Längsrichtung zwischen zwei Traversenenden erstreckt, und wenn die Traverse über die Traversenenden mit dem oberen Rand des Brechergehäuses verbunden ist, können Kraftverhältnisse zwischen der Traverse und dem Brechergehäuse entstehen, die von den Schraubenbolzen nicht mehr aufgenommen werden können.

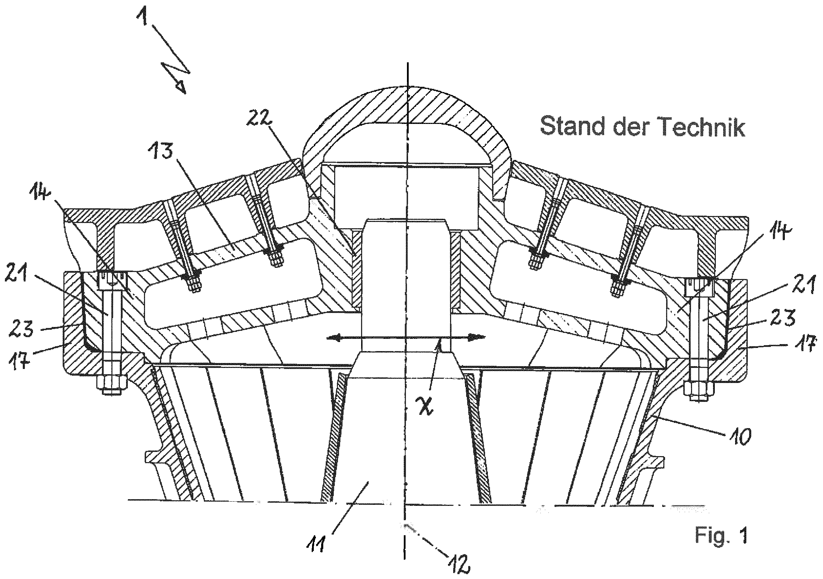

Figur 1 zeigt einen Kreiselbrecher 1 zur Zerkleinerung von Brechgut gemäß dem Stand der Technik, und eine Traverse 13 ist mittels Schraubenbolzen 21 mit dem Brechergehäuse 10 verbunden. Die Traverse 13 erstreckt sich in einer Längsrichtung X diametral über das Brechergehäuse 10 und weist endseitig zwei sich gegenüberliegende Traversenenden 14 auf, die in Aufnahmetaschen 17 aufgenommen sind, die oberseitig am Brechergehäuse 10 angeformt sind. In der Traverse 13 ist eine Abwälzbuchse 22 aufgenommen, in der die Brechachse 11 gelagert ist und eine Taumelbewegung um die Vertikalachse 12 ausführen kann.

Die hohen Prozesskräfte zwischen der Brechachse 11 und dem Brechergehäuse 10 fordern eine mechanisch hoch belastbare Verbindung zwischen der Traverse 13 und dem Brechergehäuse 10. Um die Verbindung zwischen der Traverse 13 und dem Brechergehäuse 10 durch die Schraubenbolzen 21 weiter zu verstärken, sind die Traversenenden 14 in den Aufnahmetaschen 17 am Brechergehäuse 10 mit einer aushärtenden Epoxydmasse 23 vergossen. Dadurch erhält die Verbindung zwischen dem Brechergehäuse 10 und der Traverse 13 eine ausreichende mechanische Belastbarkeit, jedoch ergeben sich Nachteile bei der Entnahme der Traverse 13 vom Brechergehäuse 10, die beispielsweise im Rahmen von Wartungsarbeiten des Kreiselbrechers 1 erforderlich ist. Um die Traverse 13 vom Brechergehäuse 10 zu entnehmen, muss die Verbindung durch die Epoxydmasse 23 zwischen den Traversenenden 14 und den Aufnahmetaschen 17 aufwendig gelöst werden, und beim erneuten Verbinden der Traverse 13 mit dem Brechergehäuse 10 muss die Verbindung durch die Epoxydmasse 23 zusätzlich zur Verbindung durch die Schraubenbolzen 21 ebenfalls wieder hergestellt werden. Daher ist es wünschenswert, eine einfach einzurichtende Verbindung zwischen der Traverse und dem Brechergehäuse zu schaffen, die derart ausgestaltet ist, dass die hohen mechanischen Kräfte zwischen der Traverse und dem Brechergehäuse übertragen werden können.

### OFFENBARUNG DER ERFINDUNG

Es ist die Aufgabe der vorliegenden Erfindung, einen Kreiselbrecher zur Zerkleinerung von Brechgut mit einem Brechergehäuse und einer Traverse zur Aufnahme einer Brechachse zu schaffen, der eine mechanisch hoch belastbare und zugleich einfach lösbare Verbindung zwischen der Traverse und dem Brechergehäuse aufweist.

Diese Aufgabe wird ausgehend von einem Kreiselbrecher zur Zerkleinerung von Brechgut gemäß dem Oberbegriff des Anspruches 1 in Verbindung mit den kennzeichnenden Merkmalen gelöst. Ebenfalls löst ein Verfahren gemäß Anspruch 9 die Aufgabe der Erfindung. Vorteilhafte Weiterbildungen der Erfindung sind in den abhängigen Ansprüchen angegeben.

Die Erfindung schließt die technische Lehre ein, dass die Verbindung der Traversenenden mit dem Brechergehäuse wenigstens eine hydraulische Spanneinrichtung aufweist.

Die Erfindung geht von dem Gedanken aus, mit einer hydraulischen Spanneinrichtung große erzielbare Klemmkräfte zur Verbindung der Traverse mit dem Brechergehäuse zu nutzen. Durch die hydraulische Spanneinrichtung können die Traversenenden am Brechergehäuse verspannt und insbesondere verklemmt werden, wobei die Verbindung zwischen der Traverse und dem Brechergehäuse basierend auf der hydraulischen Spanneinrichtung die Verwendung weiterer Verbindungsmittel, beispielsweise Schraubenbolzen, nicht ausschließt. Ebenso wie die aus dem Stand der Technik bekannte Epoxydmasse zum Vergießen der Traversenenden in den Aufnahmetaschen des Brechergehäuses kann erfindungsgemäß die hydraulische Spanneinrichtung als zusätzliches Mittel zur Verbindung der Traverse mit dem Brechergehäuse dienen.

Die hydraulische Spanneinrichtung kann so ausgebildet sein, dass die Traverse am Brechergehäuse verklemmt wird. Ebenso kann vorgesehen sein, die hydraulische Spanneinrichtung so auszubilden, dass die Traverse mittels der hydraulischen Spanneinrichtung formschlüssig am Brechergehäuse befestigt wird.

Gemäß einer vorteilhaften Ausführungsform kann die hydraulische Spanneinrichtung wenigstens ein hydraulisch wirkendes Spannelement umfassen. Das hydraulisch wirkende Spannelement kann der Bauart eines Hubzylinders und insbesondere der eines Hubstempels entsprechen, wobei das Spannelement so ausgeführt sein kann, dass dieses über kurzen Verfahrwegen sehr hohe Druckkräfte bereitstellen kann. Die hydraulisch wirkenden Spannelemente können mit einem Druckfluid betrieben werden, das beispielsweise durch ein Hydrauliköl gebildet ist.

Gemäß einer vorteilhaften Ausgestaltung des Brechergehäuses des Kreiselbrechers kann dieses Aufnahmetaschen zur Aufnahme der Traversenenden aufweisen, und die hydraulische Spanneinrichtung kann zur Verspannung der Traversenenden in den Aufnahmetaschen angeordnet sein. Die Spannelemente der Spanneinrichtung können beispielsweise in den Aufnahmetaschen angeordnet sein, um die Traverse über ihre Traversenenden in den Aufnahmetaschen zu verspannen. Beispielsweise kann sich die Traverse über ihre Traversenenden in einer Längsrichtung erstrecken, wobei wenigstens ein hydraulisch wirkendes Spannelement vorgesehen ist, das die Traverse in ihrer Längsrichtung zwischen den zwei Aufnahmetaschen verspannt. Weiterhin können hydraulisch wirkende Spannelemente vorgesehen sein, die die Traversenenden in einer quer zur Längsrichtung verlaufenden Querrichtung in den jeweiligen Aufnahmetaschen verspannen. Folglich kann ein erstes Spannelement oder ein erstes Spannelementepaar vorgesehen sein, das eine Kraft in Längsrichtung der Traverse aufbringen kann. Dabei kann es hinreichend sein, dass in einer der Aufnahmetaschen das Spannelement oder beispielsweise das Spannelementepaar angeordnet ist, um die Längskraft auf die Traverse aufzubringen. Spannelemente, die die Traversenenden in Querrichtung in den Aufnahmetaschen verspannen, können in jeder der Aufnahmetaschen angeordnet sein.

Mit weiterem Vorteil können Gegendruckelemente vorgesehen sein, die der Anordnung der hydraulisch wirkenden Spannelemente jeweils gegenüberliegend in den Aufnahmetaschen angeordnet sind. Die Gegendruckelemente können beispielsweise austauschbar in der Aufnahmetasche eingesetzt werden, und zur wenigstens einmaligen Einjustage der Traverse am Brechergehäuse kann durch entsprechenden Einsatz oder Austausch eines oder mehrerer Gegendruckelemente die genaue Position der Traverse am Brechergehäuse bestimmt werden, wenn die hydraulisch wirkenden Spannelemente unter Druck gesetzt sind. Insbesondere können die Gegendruckelemente Unterlegbleche umfassen, mit denen eine effektive Höhe der Gegendruckelemente eingestellt werden kann, sodass die Traverse über das Höhenmaß der Gegendruckelemente am Brechergehäuse ausgerichtet werden kann.

Nach einer vorteilhaften Weiterbildung des erfindungsgemäßen Kreiselbrechers kann eine Druckmittelversorgungseinrichtung vorgesehen sein, wobei die hydraulisch wirkenden Spannelemente über Druckmittelleitungen mit der Druckmittelversorgungseinrichtung verbunden werden können. Insbesondere kann die Druckmittelversorgungseinrichtung zur Aufrechterhaltung einer Mindestspannkraft durch die hydraulisch wirkenden Spannelemente zur Verspannung der Traverse ausgebildet sein. Hierzu kann beispielsweise eine Drucküberwachung des Druckmittels vorgesehen sein, mit dem die hydraulisch wirkenden Spannelemente beaufschlagt sind. Sinkt der überwachte Hydraulikdruck unter einen Grenzwert, so kann beispielsweise eine Hydraulikpumpe in Betrieb gesetzt werden, um den Hydraulikdruck wieder auf einen Mindestwert anzuheben. Dadurch kann insbesondere während des Betriebes des Kreiselbrechers die erforderliche, mechanisch hoch belastbare Verbindung zwischen der Traverse und dem Brechergehäuse sichergestellt werden.

Als Grundverbindung zur Anordnung der Traverse am Brechergehäuse können Schraubenbolzen Verwendung finden, wie diese bereits aus dem Stand der Technik bekannt sind. Somit dient die erfindungsgemäße hydraulische Spanneinrichtung insbesondere als zusätzliche mechanische Verbindung, mit der die Traverse am Brechergehäuse angeordnet wird, und zusätzlich können die Traversenenden in den Aufnahmetaschen verschraubt werden. Beispielsweise kann jedes der Traversenenden mit zwei Schraubenbolzen in den Aufnahmetaschen verschraubt werden, die sich vorzugsweise parallel zur Vertikalachse des Kreiselbrechers erstrecken.

Im Ergebnis kann eine Verbindung der Traverse am Brechergehäuse eines Kreiselbrechers geschaffen werden, die ohne die Verwendung einer Epoxydmasse hoch belastbar ausgebildet ist, um die mechanischen Kräfte zwischen der Brechachse und dem Brechergehäuse aufzunehmen. Der Vorteil liegt insbesondere darin, dass durch eine einfache Druckentlastung des hydraulischen Systems die hydraulische Spanneinrichtung gelöst werden kann, woraufhin lediglich noch die Schraubenbolzen zwischen der Traverse und dem Brechergehäuse entnommen werden müssen, um die Traverse schließlich vom Brechergehäuse zu entfernen. Ist die Traverse im Rahmen von Wartungsarbeiten oder aus sonstigen Gründen vom Brechergehäuse entnommen worden, kann diese auf einfache Weise wieder am Brechergehäuse angeordnet werden, indem die hydraulische Spanneinrichtung wieder aktiviert wird und indem die Schraubenbolzen zwischen der Traverse und dem Brechergehäuse wieder eingesetzt werden.

Die vorliegende Erfindung richtet sich ferner auf ein Verfahren zur Verbindung einer Traverse mit einem Brechergehäuse eines Kreiselbrechers, der zur Zerkleinerung von Brechgut dient. Im Brechergehäuse des Kreiselbrechers ist eine Brechachse angeordnet, die um eine Vertikalachse taumelbeweglich im Brechergehäuse aufgenommen ist, und wobei die Traverse zur Aufnahme der Brechachse vorgesehen ist und sich hierfür etwa diametral über das Brechergehäuse erstreckt und mit ihren Traversenenden mit dem Brechergehäuse verbunden ist. Dabei sieht das Verfahren vor, dass die Traverse über ihre Traversenenden zur Verbindung mit dem Brechergehäuse mittels wenigstens einer hydraulischen Spanneinrichtung verspannt wird.

Zusätzlich kann das Verfahren zur Verbindung der Traverse über ihre Traversenenden mit dem Brechergehäuse den Schritt der Verschraubung mittels Schraubenbolzen umfassen. Um die jeweilige Verbindungswirkung zur Verbindung der Traverse mit dem Brechergehäuse durch die hydraulische Spanneinrichtung einerseits und durch die Schraubenbolzen andererseits nicht negativ zu beeinflussen, kann das Verfahren zur Verbindung der Traverse mit dem Brechergehäuse kaskadiert ausgeführt werden.

Ein bevorzugtes Verfahren zur Verbindung der Traverse mit dem Brechergehäuse sieht vor, dass zunächst ein hydraulisches Vorpositionieren der Traversenenden in den Aufnahmetaschen am Brechergehäuse durch Aktivieren der hydraulischen Spanneinrichtung unter Aufbringung eines Vorspanndruckes vorgenommen wird. Dabei weist der Vorspanndruck einen Wert auf, der kleiner als der endgültige Betriebsspanndruck sein kann.

Der Vorspanndruck kann beispielsweise so gering gewählt werden, dass die Traverse ausreichend an die Gegendruckelemente positioniert werden kann, der Vorspanndruck kann aber auch bereits den Betriebsspanndruck erreichen. Anschließend werden die Zylinder druckentlastet und die Schraubenbolzen werden eingesetzt und können unter Aufbringung der Betriebs-Schraubenvorspannung endgültig festgezogen werden. Danach kann der Spanndruck der hydraulischen Spanneinrichtung auf einen Betriebsspanndruck gebracht werden.

Um eine dauerhafte Verbindung der Traverse mit dem Brechergehäuse unter Nutzung der hydraulischen Spanneinrichtung sicherzustellen, kann der Betriebsspanndruck der hydraulischen Spanneinrichtung durch eine Druckmittelversorgungseinrichtung überwacht und aufrecht gehalten werden. Beispielsweise kann die Überwachung des Betriebsspanndruckes wenigstens dann erfolgen, wenn der Kreiselbrecher in Betrieb ist. Um die Traverse vom Brechergehäuse zu entnehmen, kann beispielsweise zunächst der hydraulische Betriebsspanndruck vom System entnommen werden, sodass die hydraulische Spanneinrichtung deaktiviert wird. Anschließend können die Schraubenbolzen zwischen der Traverse und dem Brechergehäuse entnommen werden, sodass anschließend die Traverse frei vom Brechergehäuse entnommen werden kann.

Das Verfahren zur erstmaligen Verbindung der Traverse am Brechergehäuse kann den Schritt einer Referenzierung umfassen, um die am Brechergehäuse angeordneten Gegendruckelemente entsprechend einzurichten. Beispielsweise kann am Brechergehäuse eine Referenzkante vorhanden sein, gegen die ein Referenzanschlag an der Traverse zur Anlage gebracht werden kann. Anschließend kann die Dicke der Gegendruckelemente so bestimmt werden, dass ausgehend vom Anschlag der Traverse gegen die Referenzkante am Brechergehäuse nach Aufbringung des hydraulischen Druckes auf die Spanneinrichtung die Traverse positionsgenau am Brechergehäuse angeordnet ist. Insbesondere kann über die Dicke der Gegendruckelemente die genaue Position der Traversenenden in den zugeordneten Aufnahmetaschen eingestellt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Querschnitt durch einen Kreiselbrecher mit einer Traverse, die gemäß dem Stand der Technik am Brechergehäuse angeordnet ist und
- Figur 2: eine perspektivische Ansicht eines Ausführungsbeispiels, das einen Kreiselbrecher mit einer an einem Brechergehäuse angeordneten Traverse mit den Merkmalen der vorliegenden Erfindung zeigt.

Figur 1 zeigt einen Kreiselbrecher 1 gemäß dem Stand der Technik und wurde einleitend bereits beschrieben.

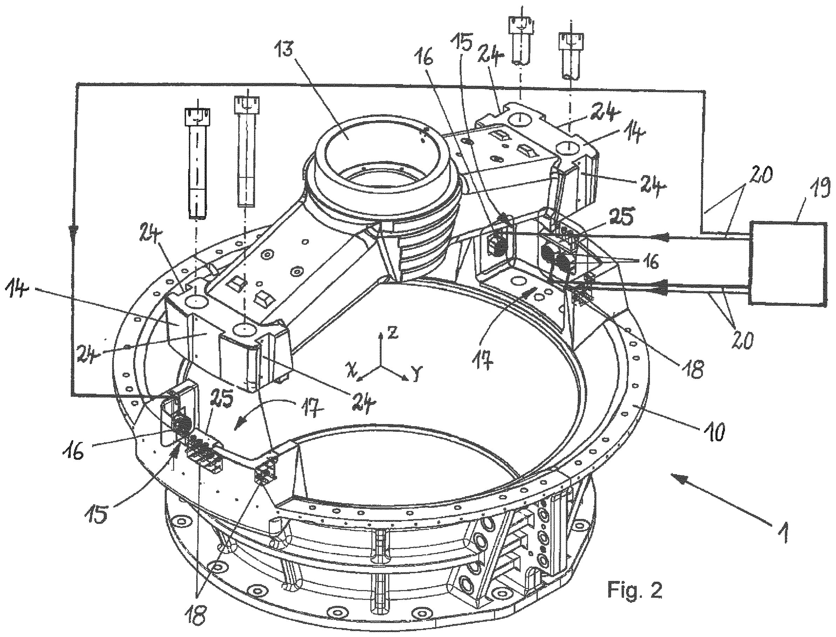

Figur 2 zeigt Bestandteile eines Kreiselbrechers 1 gemäß Figur 1, wobei lediglich der obere Teil des Brechergehäuses 10 und die am Brechergehäuse 10 angeordnete Traverse 13 gezeigt sind. Die Traverse 13 erstreckt sich entlang einer Längsrichtung X, und kann in etwa diametraler Anordnung über dem Brechergehäuse 10 an diesem angeordnet werden. Zur Aufnahme der Traverse 13 am Brechergehäuse 10 weist die Traverse 13 an ihren gegenüberliegenden Endseiten Traversenenden 14 auf, wobei am Brechergehäuse 10 sich gegenüberliegende Aufnahmetaschen 17 ausgebildet sind, in die die Traversenenden 14 einsitzen können. Um die Traverse 13 am Brechergehäuse 10 anzuordnen, wird diese in negativer Z-Richtung, die die Hochrichtung des Kreiselbrechers 1 wiedergibt, an das Brechergehäuse 10 angesetzt, wobei die Hochrichtung Z der Vertikalachse 12 gemäß der Stand der Technik-Figur 1 entspricht.

Erfindungsgemäß befinden sich in den Aufnahmetaschen 17 jeweilige hydraulisch wirkende Spanneinrichtungen 15. Die hydraulisch wirkenden Spanneinrichtungen 15 umfassen jeweils hydraulisch wirkende Spannelemente 16, die dazu eingerichtet sind, die Traversenenden 14 in den Aufnahmetaschen 17 derart zu verspannen, dass sich eine lösbare, jedoch mechanisch hoch belastbare Verbindung zwischen der Traverse 13 und dem Brechergehäuse 10 ergibt.

In der hinteren Aufnahmetasche 17 sind drei Spannelemente 16 und in der vorderen Aufnahmetasche 17 ist ein Spannelement 16 angeordnet. Zwei ein Spannelementepaar bildende Spannelemente 16 befinden sich angeordnet an einer Außenwand der Aufnahmetasche 17, sodass diese Spannelemente 16 auf die Traverse 13 eine Verspannung in Längsrichtung X aufbringen. In jeder der Aufnahmetasche 17 befinden sich an einer Seitenwand weitere hydraulisch wirkende Spannelemente 16, um die jeweiligen Traversenenden 14 in einer Querrichtung Y in den Aufnahmetaschen 17 zu verspannen. An den Traversenenden 14 sind Druckflächen 24 ausgebildet, die jeweils planparallel beabstandet zueinander verlaufen, sodass der Spanndruck zwischen den Spannelementen 16 und den Gegendruckelementen 18 über die Druckflächen 24 aufgenommen werden kann. Die als Hydraulikzylinder ausgebildeten Spannelemente 16 sind durch Traversenführungen 25 geschützt, die in den Aufnahmetaschen 17 eingebracht sind und einen sicheren Einbau der Traverse 13 garantieren.

Schematisch gezeigt ist weiterhin eine Druckmittelversorgungseinrichtung 19, die über Druckmittelleitungen 20 mit den jeweiligen Spannelementen 16 verbunden ist. Die Druckmittelversorgungseinrichtung 19 versorgt die Spannelemente 16 mit Druckmittel, das beispielsweise durch Hydrauliköl gebildet sein kann. Dabei ist vorgesehen, dass wenigstens während des Betriebs des Kreiselbrechers 1 die Druckmittelversorgungseinrichtung 19 die Spannelemente 16 dauerhaft mit einem hydraulischen Mindestdruck beaufschlagt, um die mechanisch hoch belastete Verbindung zwischen der Traverse 13 und dem Brechergehäuse 10 dauerhaft sicherzustellen. Hierfür kann die Druckmittelversorgungseinrichtung 19 einen Druckwächter umfassen, um den Mindestdruck des hydraulischen Systems der hydraulischen Spanneinrichtung 15 zu überwachen.

Durch die erfindungsgemäße Verspannung der Traverse 13 am Brechergehäuse 10 des Kreiselbrechers 1 ergibt sich vor allem eine wartungsfreundliche Montage und Demontage der Traverse 13, wodurch ein enormer wirtschaftlicher Vorteil erreicht wird. Nach einmaliger Einstellung der Dicken der Gegendruckelemente 18 kann sofort nach dem Einsetzen der Traverse 13 die zusätzliche Verspannung über die hydraulisch wirkenden Spannelemente 16 erfolgen. Die Überwachung und Bedienung der Druckmittelversorgungseinrichtung 19 kann beispielsweise Bestandteil einer Kreiselbrecher-Steuerung sein, die unter dem Handelsnamen GYRAMATIC bekannt ist. Mit dieser Steuerung kann der Druck, der durch die Druckmittelversorgungseinrichtung 19 auf die Spannelemente 16 gegeben wird, überwacht werden. Insbesondere entfällt das Vergießen der Traversenenden 14 der Traverse 13 in den Aufnahmetaschen 17 des Brechergehäuses 10 mit Epoxydharz, sodass auch die damit verbundene Aushärtezeit von ca. 24 Stunden entfällt und es müssen keine Epoxydharzreste bei der Demontage der Traverse 13 aus den Aufnahmetaschen 17 entnommen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 1: Kreiselbrecher

- 10: Brechergehäuse
- 11: Brechachse
- 12: Vertikalachse
- 13: Traverse
- 14: Traversenende
- 15: hydraulische Spanneinrichtung
- 16: hydraulisch wirkendes Spannelement
- 17: Aufnahmetasche
- 18: Gegendruckelement
- 19: Druckmittelversorgungseinrichtung
- 20: Druckmittelleitung
- 21: Schraubenbolzen
- 22: Abwälzbuchse
- 23: Epoxydmasse
- 24: Druckfläche
- 25: Traversenführung

- X: Längsrichtung
- Y: Querrichtung
- Z: Hochrichtung

## Patentansprüche

1. Kreiselbrecher (1) zur Zerkleinerung von Brechgut mit einem Brechergehäuse (10), in dem eine Brechachse (11) angeordnet ist und die um eine Vertikalachse (12) taumelbeweglich im Brechergehäuse (10) aufgenommen ist, wobei zur Aufnahme der Brechachse (11) eine Traverse (13) vorgesehen ist, die sich diametral über das Brechergehäuse (10) erstreckt und mit ihren Traversenenden (14) mit dem Brechergehäuse (10) verbunden ist,
**dadurch gekennzeichnet, dass** die Verbindung der Traversenenden (14) mit dem Brechergehäuse (10) wenigstens eine hydraulische Spanneinrichtung (15) aufweist.

2. Kreiselbrecher (1) nach Anspruch 1, **dadurch gekennzeichnet, dass** die hydraulische Spanneinrichtung (15) wenigstens ein hydraulisch wirkendes Spannelement (16) umfasst.

3. Kreiselbrecher (1) nach Anspruch 1 oder 2, **dadurch gekennzeichnet, dass** das Brechergehäuse (10) Aufnahmetaschen (17) zur Aufnahme der Traversenenden (14) aufweist, wobei die hydraulische Spanneinrichtung (15) zur Verspannung der Traversenenden (14) in den Aufnahmetaschen (17) angeordnet ist.

4. Kreiselbrecher (1) nach einem der Ansprüche 1 bis 3, **dadurch gekennzeichnet, dass** sich die Traverse (13) über ihre Traversenenden (14) in einer Längsrichtung (X) erstreckt, wobei wenigstens ein hydraulisch wirkendes Spannelement (16) vorgesehen ist, das die Traverse (13) in der Längsrichtung (X) der Traverse (13) zwischen zwei Aufnahmetaschen (17) längsverspannt.

5. Kreiselbrecher (1) nach einem der vorgenannten Ansprüche, **dadurch gekennzeichnet, dass** hydraulisch wirkende Spannelemente (16) vorgesehen sind, die die Traversenenden (14) in einer quer zur Längsrichtung (X) verlaufenden Querrichtung (Y) in den jeweiligen Aufnahmetaschen (17) verspannen.

6. Kreiselbrecher (1) nach Anspruch 4 oder 5, **dadurch gekennzeichnet, dass** Gegendruckelemente (18) vorgesehen sind, die der Anordnung der hydraulisch wirkenden Spannelemente (16) gegenüberliegend in den Aufnahmetaschen (17) angeordnet sind.

7. Kreiselbrecher (1) nach einem der Ansprüche 2 bis 6, **dadurch gekennzeichnet, dass** eine Druckmittelversorgungseinrichtung (19) vorgesehen ist, wobei die hydraulisch wirkenden Spannelemente (16) über Druckmittelleitungen (20) mit der Druckmittelversorgungseinrichtung (19) verbunden sind, und wobei die Druckmittelversorgungseinrichtung (19) zur Aufrechterhaltung einer Mindestspannkraft durch die hydraulisch wirkenden Spannelemente (16) zur Verspannung der Traverse (13) ausgebildet sind.

8. Kreiselbrecher (1) nach einem der Ansprüche 3 bis 7, **dadurch gekennzeichnet, dass** Schraubenbolzen (21) vorgesehen sind, mit denen die Traversenenden (14) in den Aufnahmetaschen (17) verschraubt sind.

9. Verfahren zur Verbindung einer Traverse (13) mit einem Brechergehäuse (10) eines Kreiselbrechers (1) zur Zerkleinerung von Brechgut, in dem eine Brechachse (11) angeordnet ist und die um eine Vertikalachse (12) taumelbeweglich im Brechergehäuse (10) aufgenommen ist, wobei die Traverse (13) zur Aufnahme der Brechachse (11) vorgesehen ist und die sich diametral über das Brechergehäuse (10) erstreckt und mit ihren Traversenenden (14) mit dem Brechergehäuse (10) verbunden ist,
**dadurch gekennzeichnet, dass** die Traverse (13) über ihre Traversenenden (14) zur Verbindung mit dem Brechergehäuse (10) mittels wenigstens einer hydraulischen Spanneinrichtung (15) verspannt wird.

10. Verfahren nach Anspruch 9, **dadurch gekennzeichnet, dass** die Traverse (13) über ihre Traversenenden (14) zur Verbindung mit dem Brechergehäuse (10) zusätzlich mittels Schraubenbolzen (21) verschraubt wird.

11. Verfahren nach Anspruch 10, **dadurch gekennzeichnet, dass** die Verbindung der Traverse (13) mit dem Brechergehäuse (10) wenigstens mit den folgenden Schritten hergestellt wird:
- hydraulisches Vorpositionieren der Traversenenden (14) in Aufnahmetaschen (17) am Brechergehäuse (10) durch Aktivieren der hydraulischen Spanneinrichtung (15) unter Aufbringung eines Vorspanndruckes,
- anschließende Druckentlastung der Hydraulikzylinder,
- Einschrauben der Schraubenbolzen (21) unter Aufbringung der Betriebs-Schraubenvorspannung,
- erneute Aufbringung des Spanndruckes der hydraulischen Spanneinrichtung (15) insbesondere auf einen Betriebsspanndruck.

12. Verfahren nach einem der Ansprüche 9 bis 11, **dadurch gekennzeichnet, dass** der Betriebsspanndruck der hydraulischen Spanneinrichtung (15) durch eine Druckmittelversorgungseinrichtung (19) überwacht und aufrecht gehalten wird.

## Claims

1. Gyratory crusher (1) for comminuting material to be crushed, having a crusher housing (10) in which a crusher shaft (11) is arranged and which is received in the crusher housing (10) such that it can tumble about a vertical axis (12), wherein a cross member (13) is provided to receive the crusher shaft (11), which cross member extends diametrically across the crusher housing (10) and is connected by its cross-member ends (14) to the crusher housing (10), **characterized in that** the connection between the cross-member ends (14) and the crusher housing (10) exhibits at least one hydraulic clamping device (15).

2. Gyratory crusher (1) according to Claim 1, **characterized in that** the hydraulic clamping device (15) comprises at least one hydraulically acting clamping element (16).

3. Gyratory crusher (1) according to Claim 1 or 2, **characterized in that** the crusher housing (10) exhibits receiving pockets (17) for receiving the cross-member ends (14), wherein the hydraulic clamping device (15) for clamping the cross-member ends (14) is arranged in the receiving pockets (17).

4. Gyratory crusher (1) according to one of Claims 1 to 3, **characterized in that** the cross member (13) extends in a longitudinal direction (X) via its cross-member ends (14), wherein at least one hydraulically acting clamping element (16) is provided which clamps the cross member (13) longitudinally in the longitudinal direction (X) of the cross member (13) between two receiving pockets (17).

5. Gyratory crusher (1) according to one of the preceding claims, **characterized in that** hydraulically acting clamping elements (16) are provided which clamp the cross-member ends (14) in a transverse direction (Y) running transversely to the longitudinal direction (X) in the respective receiving pockets (17).

6. Gyratory crusher (1) according to Claim 4 or 5, **characterized in that** counter-pressure elements (18) are provided which are arranged opposite the configuration of the hydraulically acting clamping elements (16) in the receiving pockets (17).

7. Gyratory crusher (1) according to one of Claims 2 to 6, **characterized in that** a pressurizing medium supply device (19) is provided, wherein the hydraulically acting clamping elements (16) are connected via pressurizing medium lines (20) to the pressurizing medium supply device (19) and wherein the pressurizing medium supply device (19) is designed to maintain a minimum clamping force through the hydraulically acting clamping elements (16) to clamp the cross member (13).

8. Gyratory crusher (1) according to one of Claims 3 to 7, **characterized in that** threaded bolts (21) are provided, by means of which the cross-member ends (14) are screwed into the receiving pockets (17).

9. Method of connecting a cross member (13) to a crusher housing (10) of a gyratory crusher (1) for comminuting material to be crushed, in which a crusher shaft (11) is arranged and is received in the crusher housing (10) such that it can tumble about a vertical axis (12), wherein the cross member (13) is provided to receive the crusher shaft (11) and extends diametrically across the crusher housing (10) and is connected by its cross-member ends (14) to the crusher housing (10),
**characterized in that** the cross member (13) is clamped by its cross-member ends (14) to connect to the crusher housing (10) by means of at least one hydraulic clamping device (15).

10. Method according to Claim 9, **characterized in that** the cross member (13) is screwed in addition by means of threaded bolts (21) via its cross-member ends (14) to connect to the crusher housing (10).

11. Method according to Claim 10, **characterized in that** the connection between the cross member (13) and the crusher housing (10) is made at least using the following steps:
- hydraulic pre-positioning of the cross-member ends (14) in receiving pockets (17) on the crusher housing (10) by activating the hydraulic clamping device (15) while applying a pre-clamping pressure,
- subsequent depressurization of the hydraulic cylinders,
- tightening of the threaded bolts (21) by applying the operating screw pretension,
- return of the clamping pressure of the hydraulic clamping device (15), particularly to an operating clamping pressure.

12. Method according to one of Claims 9 to 11,
**characterized in that** the operating clamping pressure of the hydraulic clamping device (15) is monitored and maintained by a pressurizing medium supply device (19).

## Revendications

1. Concasseur giratoire (1) pour le broyage de matériau à concasser avec un boîtier de concasseur (10) dans lequel est disposé un axe de concasseur (11) et lequel est reçu dans le boîtier de concasseur (10) de manière déplaçable en nutation autour d'un axe vertical (12), une traverse (13) étant prévue pour recevoir l'axe de concasseur (11), laquelle s'étend diamétralement au-delà du boîtier de concasseur (10) et est raccordée par ses extrémités de traverse (14) au boîtier de concasseur (10),
**caractérisé en ce que** le raccordement des extrémités de traverse (14) au boîtier de concasseur (10) présente au moins un dispositif de serrage hydraulique (15).

2. Concasseur giratoire (1) selon la revendication 1,
**caractérisé en ce que** le dispositif de serrage hydraulique (15) comprend au moins un élément de serrage (16) à commande hydraulique.

3. Concasseur giratoire (1) selon la revendication 1 ou 2, **caractérisé en ce que** le boîtier de concasseur (10) présente des cavités de réception (17) pour recevoir les extrémités de traverse (14) le dispositif de serrage hydraulique (15) étant prévu pour serrer les extrémités de traverse (14) dans les cavités de réception (17).

4. Concasseur giratoire (1) selon l'une quelconque des revendications 1 à 3, **caractérisé en ce que** la traverse (13) s'étend sur ses extrémités de traverse (14) dans une direction longitudinale (X), au moins un élément de serrage (16) à commande hydraulique étant prévu, lequel serre longitudinalement la traverse (13) dans la direction longitudinale (X) de la traverse (13) entre deux cavités de réception (17).

5. Concasseur giratoire (1) selon l'une quelconque des revendications précédentes, **caractérisé en ce que** des éléments de serrage (16) à commande hydraulique sont prévus, lesquels serrent les extrémités de traverse (14) dans une direction transversale (Y) s'étendant transversalement à la direction longitudinale (X) dans les cavités de réception respectives (17).

6. Concasseur giratoire (1) selon la revendication 4 ou 5, **caractérisé en ce que** des éléments de contre-pression (18) sont prévus, lesquels sont disposés dans les cavités de réception (17) à l'opposé de l'agencement des éléments de serrage (16) à commande hydraulique.

7. Concasseur giratoire (1) selon l'une quelconque des revendications 2 à 6, **caractérisé en ce qu'**un dispositif d'alimentation en fluide sous pression (19) est prévu, les éléments de serrage (16) à commande hydraulique étant raccordés par le biais de conduites de fluide sous pression (20) au dispositif d'alimentation en fluide sous pression (19), et le dispositif d'alimentation en fluide sous pression (19) étant réalisé pour maintenir une force de serrage minimale par les éléments de serrage (16) à commande hydraulique pour serrer la traverse (13).

8. Concasseur giratoire (1) selon l'une quelconque des revendications 3 à 7, **caractérisé en ce que** des boulons filetés (21) sont prévus, avec lesquels les extrémités de traverse (14) sont vissées dans les cavités de réception (17).

9. Procédé pour assembler une traverse (13) à un boîtier de concasseur (10) d'un concasseur giratoire (1) pour le broyage de matériau à concasser, dans lequel est disposé un axe de concasseur (11) et lequel est reçu dans le boîtier de concasseur (10) de manière déplaçable en nutation autour d'un axe vertical (12), la traverse (13) étant prévue pour recevoir l'axe de concasseur (11) et laquelle s'étend diamétralement au-delà du boîtier de concasseur (10) et est raccordée par ses extrémités de traverse (14) au boîtier de concasseur (10),
**caractérisé en ce que** la traverse (13) est serrée par le biais de ses extrémités de traverse (14) pour le raccordement au boîtier de concasseur (10) au moyen d'au moins un dispositif de serrage hydraulique (15).

10. Procédé selon la revendication 9, **caractérisé en ce que** la traverse (13) est en outre vissée par le biais de ses extrémités de traverse (14) pour le raccordement au boîtier de concasseur (10) au moyen de boulons filetés (21).

11. Procédé selon la revendication 10, **caractérisé en ce que** le raccordement de la traverse (13) au boîtier de concasseur (10) est réalisé au moins avec les étapes suivantes :
- pré-positionnement hydraulique des extrémités de traverse (14) dans des cavités de réception (17) au niveau du boîtier de concasseur (10) par activation du dispositif de serrage hydraulique (15) en appliquant une pression de précontrainte,
- détente de pression subséquente des cylindres hydrauliques,
- vissage des boulons filetés (21) en appliquant la précontrainte de vissage nominale,
- application renouvelée de la pression de serrage du dispositif de serrage hydraulique (15), en particulier à une pression de serrage nominale.

12. Procédé selon l'une quelconque des revendications 9 à 11, **caractérisé en ce que** la pression de serrage nominale du dispositif de serrage hydraulique (15) est contrôlée et maintenue par un dispositif d'alimentation en fluide sous pression (19).
